# Europäisches Patentamt

# European Patent Office

# Office européen des brevets

(19)

(11) Veröffentlichungsnummer : **0 138 890**

**B1**

(12)    **EUROPÄISCHE PATENTSCHRIFT**

(45) Veröffentlichungstag der Patentschrift :
03.12.86

(51) Int. Cl.⁴ : **B 01 D 47/02**

(21) Anmeldenummer : **84901176.2**

(22) Anmeldetag : **14.03.84**

(86) Internationale Anmeldenummer :
**PCT/AT 84/00012**

(87) Internationale Veröffentlichungsnummer :
**WO/8403843 (11.10.84 Gazette 84/24)**

(54) **EINRICHTUNG ZUR BEHANDLUNG VON VERBRENNUNGSGASEN.**

(30) Priorität : **01.04.83 AT 1167/83**

(43) Veröffentlichungstag der Anmeldung :
**02.05.85 Patentblatt 85/18**

(45) Bekanntmachung des Hinweises auf die Patenterteilung : **03.12.86 Patentblatt 86/49**

(84) Benannte Vertragsstaaten :
**BE CH DE FR GB LI NL SE**

(56) Entgegenhaltungen :
**AU-A- 466 194
GB-A- 1 024 169
US-A- 3 585 786**

(73) Patentinhaber : **FOIDL, Leonhard**
**Hochfügener Strasse 258**
**A-6263 Fügen (AT)**

(72) Erfinder : **FOIDL, Leonhard**
**Hochfügener Strasse 258**
**A-6263 Fügen (AT)**

(74) Vertreter : **Torggler, Paul Dr. et al**
**Wilhelm-Greil-Strasse 16**
**A-6020 Innsbruck (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 138 890 B1

**Beschreibung**

Die Erfindung betrifft eine Einrichtung zur Behandlung von Verbrennungsgasen aus Verbrennungsanlagen, mit einem Behälter, mit einem Zuführungskanal für die Verbrennungsgase, mit einem Austrittskanal für die behandelten Verbrennungsgase, mit einer in zwei verschiedenen Füllhöhen vorgesehenen Waschflüssigkeit im Unterteil des Behälters, wobei bei größter Füllhöhe das Ende des Zuführungsrohres in die Waschflüssigkeit eingetaucht und bei niederster Füllhöhe mit Abstand zum Flüssigkeitsspiegel angeordnet ist, und mit nach unten gerichteten Flüssigkeitsaustrittsöffnungen im Oberteil des Behälters, sodaß austretende Waschflüssigkeit den Strömungsweg der Verbrennungsgase kreuzt.

Eine derartige Einrichtung ist beispielsweise der DE-C-51 896 zu entnehmen, die vor allem feste Bestandteile aus dem Rauch abscheidet. Die Abgase, insbesondere von Industrieanlagen, werden dabei durch oder knapp über die Waschflüssigkeit geleitet bzw. mit dieser aus Brauseköpfen benetzt, die die festen Bestandteile von den gasförmigen trennt. Je nach der Art der Flüssigkeit, beispielsweise Wasser oder organische Lösungsmittel, gehen auch gasförmige Bestandteile des Rauches in Lösung. Die Rauchgase durchströmen dabei den Oberteil des Behälters ungelenkt, sodaß die Lösewirkung von gasförmigen Bestandteilen in der aus den Brauseköpfen austretenden Waschflüssigkeit nicht besonders groß ist. Eine den Durchgang der Rauchgase hindernde Absperreinrichtung ist im Bereich der Einrichtung nicht vorgesehen.

Aus der AT-PC-285 552 ist es weiter bekannt, zur Entfernung von Feststoffen aus einem Gasstrom diesen durch ein zylindrisches Rohr zu leiten, das koaxial vom Austrittskanal durchsetzt ist. In dem sich ergebenden Ringraum sind nach unten gerichtete Sprühdüsen eingesetzt, an denen die Gase vorbei nach unten strömen, wobei unterhalb der Sprühdüsen eine Venturi-Ringdüse ausgebildet ist, die die Feststoffabscheidung bewirkt. Auch hier ist im Bereich der Einrichtung eine Durchgangssperre nicht vorgesehen.

Schließlich zeigt noch die CH-PC-463 679 eine Rauchgaswaschanlage mit einem Behälter mit Waschflüssigkeit, bei der die Rauchgase aus einem unterhalb des Wasserspiegels mündenden Zuführungsrohr austreten, und durch eine in den Austrittskanal eingesetzte Absaugvorrichtung durch die Waschanlage gesaugt werden. Der Durchgang der Rauchgase ist mit Abschalten der Absaugvorrichtung unterbrochen.

Die Erfindung hat es sich nun zur Aufgabe gestellt, eine Einrichtung der eingangs genannten Art so weiterzuentwickeln, daß einerseits eine verbesserte Reinigung der Verbrennungsgase von in der Waschflüssigkeit löslichen, gasförmigen Bestandteilen erzielt wird, und andererseits auch eine einfache Durchgangssperre durch die Einrichtung geschaffen wird.

Erfindungsgemäß wird dies nun dadurch gelöst, daß im Mittelteil des Behälters zumindest ein vertikaler Kanal, vorzugsweise mehrere nebeneinander angeordnete un durch Übertrittsöffnungen verbundene Kanäle vorgesehen sind, daß die Flüssigkeitsaustrittsöffnungen an einer Vielzahl von parallel nebeneinander angeordneten Röhrchen vorgesehen sind, die den Kanalquerschnitt am oberen Ende vollständig ausgefüllen, und die eine den natürlichen Reger simulierende Berieselung bewirken, daß oberhalb des Kanals bzw. der Kanäle ein Speicherraum angeordnet ist, in den jeder Kanal mündet und dessen Volumen zumindest dem Flüssigkeitsvolumen zwischen den beiden Füllhöhen im Unterteil des Behälters entspricht, und daß zwischen dem Unterteil des Behälters und dem Speicherraum eine eine Umwälzpumpe aufweisende Verbindungsleitung vorgesehen ist, wobei deren Fördermenge pro Zeiteinheit zumindest so groß wie die Durchtrittsmenge aller Röhrchen bei gefülltem Speicherraum ist.

Im Ruhezustand der Einrichtung bei Stillstand der Verbrennungsanlage, in dem die Waschflüssigkeit die größte Füllhöhe im Behälter aufweist, ist das Ende des Zuführungskanales in die Waschflüssigkeit eingetaucht und damit eine Durchtrittssperre geschaffen, die den ständigen Zug durch die Verbrennungsanlage unterbindet, sodaß deren Abkühlung wesentlich verlangsamt wird. Wird nun die Verbrennungsanlage in Betrieb genommen, so wird auch die Umwälzpumpe in Tätigkeit gesetzt, die Waschflüssigkeit aus dem Unterteil des Behälters in den Speicherraum oberhalb der Röhrchen befördert. Da die Rückflußmenge durch die Röhrchen während der Füllung des Speicherraumes geringer als die Fördermenge der Umwälzpumpe ist, sinkt der Flüssigkeitsspiegel im Unterteil des Behälters ab, sodaß das Ende des Zuführungsrohres freigegeben wird und die Verbrennungsgase in die Anlage einströmen können. Zur Unterstützung des Zuges kann dabei ein Sauggebläse im Austrittskanal der Einrichtung zugeschaltet werden. Sobald nun der Speicherraum gefüllt ist, wird die Waschflüssigkeit bei Offenem Speicherraum mit erhöhtem statischem Druck und bei geschlossenem Speicherraum durch den Druck der Umwälzpumpe durch die Röhrchen gepreßt und reinigt die durch die Einrichtung strömenden Verbrennungsgase. Besonders eignen sich hiebei Röhrchen, deren Verhältnis von Länge zu Durchmesser vorzugsweise 5 : 1 bis 10 : 1 ist. Hiedurch wird im Gegensatz zu üblichen Brauseköpfen eine beregnungsartige, dichte Berieselung der Verbrennungsgase erzielt. Wird die Verbrennungsanlage außer Betrieb gesetzt, so wird die Umwälzpumpe und das gegebenenfalls vorgesehene Sauggebläse ebenfalls abgeschaltet. Dies hat zur Folge, daß die im Speicherraum enthaltene Waschflüssigkeit sich über die Röhrchen langsam entleert und dadurch den Flüssigkeitsspiegel im Unterteil wieder auf jenes Niveau anhebt, in dem das Ende des Zuführungsrohres der Verbrennungsgase eingetaucht und damit deren Durchgang durch die Einrichtung gesperrt ist.

Ein besonders einfacher Aufbau der Einrichtung ergibt sich dadurch, daß der Mittelteil des Behälters als an der Ober- und Unterseite offener Kasten ausgebildet ist, der auf den Unterteil aufgesetzt ist, wobei die Kanäle durch in der Höhe alternierend versetzte Trennwände gebildet sind, von denen jede eine obere Übertrittsöffnung freilassende Trennwand im Unterteil in die Waschflüssigkeit auch bei niederster Füllhöhe eintaucht. Die Einrichtung besteht demnach aus drei einfachen, beispielsweise aus rostfreiem Blech herstellbaren Teilen, die nur übereinander gesetzt werden. Die Röhrchen können dabei in einer Einsatzplatte ausgebildet sein, die auf die nach oben versetzten Trennwände aufgelegt wird, auf die dann der Speicherraumteil aufgesetzt wird, bzw. die auch den Boden des Speicherraumteiles bilden kann.

Eine weitere Ausführung der Einrichtung kann beispielsweise so ausgebildet sein, daß der Mittelteil des Behälters aus mehreren einzelnen, die Kanäle bildenden jeweils im Unterteil auch bei niederster Füllhöhe in die Waschflüssigkeit eintauchenden Rohren besteht, zwischen denen untere und obere Übertrittskanäle vorgesehen sind, wobei die oberen Enden der Rohre in ein den Speicherraum bildendes Querrohr eingesetzt sind, und in deren Eintrittsstutzen die Röhrchen eingesetzt sind. Dadurch kann in einfacher Weise der untere Abschluß der Rohre erzielt werden. Für den Eintritt der Verbrennungsgase in die Kanäle ist weiters in bevorzugter Ausführung vorgesehen, daß der erste Kanal einen Eintrittsteil für die Verbrennungsgase aufweist, dessen Ende in gleicher Höche wie das Ende des Zuführrohres und diesem benachbart ist.

Die Kombination der erfindungsgemäßen Merkmale erbringt daher mehrere vorteilhafte Effekte : Zum einen wird durch die mehrmalige Umlenkung der Verbrennungsgase, wobei diese von der durch die Röhrchen austretenden Waschflüssigkeit wechselweise im Gleichstrom und im Gegenstrom beaufschlagt werden, nicht nur eine Reinigung der Verbrennungsgase von festen Bestandteilen, sondern — auch bei bloßem Wasser — eine weitgehende Lösung von umweltschädlichen gasförmigen Bestandteilen, insbesondere von $SO_2$ erreicht, wobei von der Überlegung ausgegangen wird, daß zumindest der größere Teil jener Bestandteile ausgewaschen werden kann, die auch im Freien im Regenwasser in Lösung gehen und den in letzter Zeit besonders gefürchteten sogenannten « sauren Regen » verursachen. Des weiteren verschließt der bei Stillstand der Anlage höhere Flüssigkeitsspiegel im Behälter den Durchgang der Verbrennungsgase in einfacher Weise, ohne daß besondere Klappen od. dgl. erforderlich sind, die bei Funktionsstörungen den Stillstand der Verbrennungsanlagen bis zur Reparatur erzwingen. Ein dritter Effekt ergibt sich schließlich daraus, daß die durch die Behandlung mit der Waschflüssigkeit erfolgende Abkühlung der Verbrennungsgase erwärmte Waschflüssigkeit durch einen Wärmetauscher geführt werden kann, sodaß die den Verbrennungsgasen entzogene Energie zum Großteil wiederverwertet werden kann. Schließlich erübrigt die Einrichtung nachgeschaltete Kamine bzw. Schornsteine, da die gekühlten und gereinigten Verbrennungsgase unmittelbar ins Freie geleitet werden können.

Nachstehend wird nun die Erfindung anhand der Figuren der beiliegenden Zeichnung näher beschrieben, ohne darauf beschränkt zu sein. In den beiden Figuren sind Längsschnitte durch zwei Ausführungsbeispiele der erfindungsgemäßen Einrichtung dargestellt.

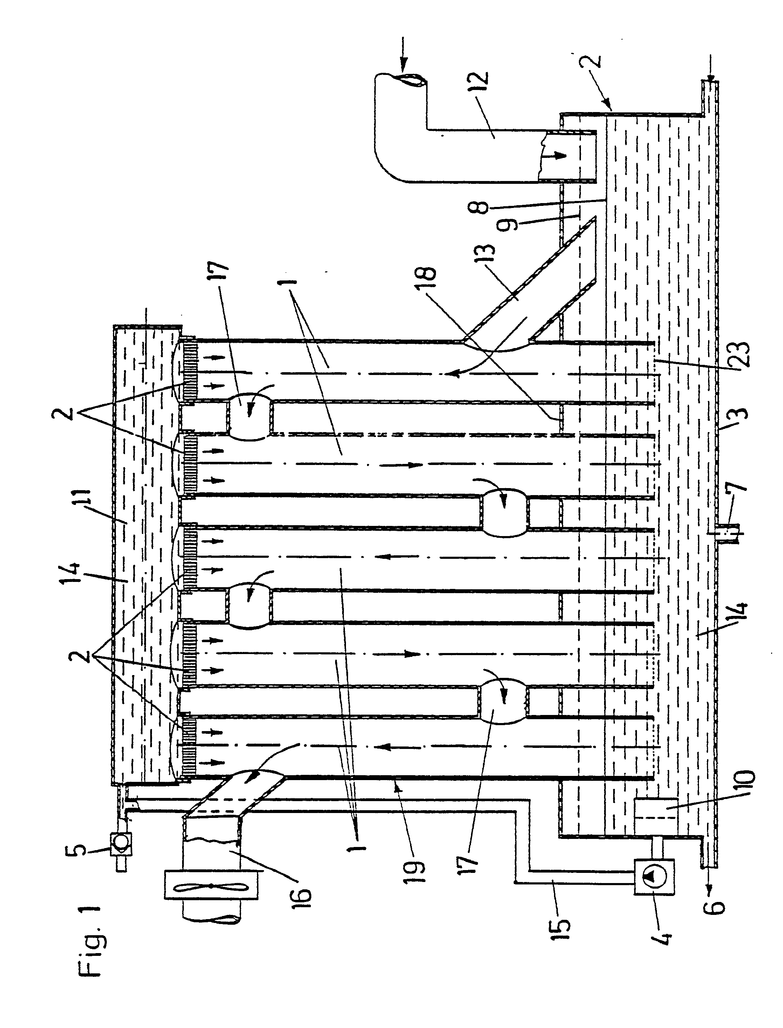

Die Einrichtung weist einen Behälter 3 auf, der aus einem wannenförmigen Unterteil 22 mit Ablaufstutzen 7 und einer Abdeckung 18, sowie aus einem Mittelteil 19 und einer Reihe von nebeneinander angeordneten vertikalen Kanälen 1 besteht, zwischen denen wechselweise obere und untere Übertrittskanäle 17 vorgesehen sind. Die Kanäle 1, die in dieser Ausführung durch Rohre gebildet sind (Fig. 1), durchdringen die Abdeckung 18 und tauchen ständig mit ihren unteren Enden in eine im Unterteil 22 des Behälters 3 enthaltene Waschflüssigkeit 14, d. h. sie enden unterhalb der geringsten Füllhöhe mit dem gezeigten Flüssigkeitsspiegel 8. In den oberen Enden der Kanäle 1 ist einer Vielzahl kleiner, parallel zueinander verlaufender Röhrchen 2 eingesetzt, die den Kanalquerschnitt jeweils vollständig ausfüllen. Oberhalb der Röhrchen 2 erstreckt sich ein Speicherraum 11, der die oberen Enden sämtlicher Kanäle 1 verbindet. Vom Unterteil des Behälters 3 führt eine Verbindungsleitung 15, an deren in die Waschflüssigkeit 14 eintauchendem Ende ein Sieb, ein Grobfilter 10 od. dgl. angeordnet ist, zum Speicherraum 11, wobei sie mit einer Umwälzpumpe 4 versehen ist. Eine Zweigleitung am speicherraumseitigen Ende der Verbindungsleitung 15 ist mit einem Rückschlagventil 5 bestückt. Ein weiteres Sieb 23 kann jeweils am unteren Ende jedes Rohres vorgesehen sein.

Die Verbrennungsgase treten von der Verbrennungsanlage kommend über das Zuführungsrohr 12 in den Unterteil 22 des Behälters 3 ein, wobei das nach unten weisende Ende des Zuführungsrohres 12 einen Abstand zum Flüssigkeitsspiegel 8 bei niederster Füllhöhe aufweist, der den Eintritt der Verbrennungsgase in die Einrichtung gestattet. Ist hingegen die höchste Füllhöhe gegeben, die durch den strichliert gezeigten Flüssigkeitsspiegel 9 dargestellt ist, so ist das Ende des Zuführungsrohres 12 überflutet und damit der Eintritt der Verbrennungsgase in den Behälter 3 gesperrt. In unmittelbarer Nachbarschaft des Zuführungsrohres 12 ist ein Eintrittsteil 13 in Form eines Rohrstückes angeordnet, dessen unteres Ende in gleicher Höhe wie das untere Ende des Zuführungsrohres 12, nämlich zwischen den beiden Flüssigkeitsspiegeln 8, 9 liegt. Der Eintrittsteil 13 führt die bei niederster Füllhöhe der Waschflüssigkeit 14 aus dem Zuführungsrohr 12 austretenden Verbrennungsgase in den ersten der Kanäle 1 ein, in dem sie aufsteigen und im Gegenstrom durch die aus den Röhrchen 2 des ersten Kanales 1 austretende, der Übersichtlichkeit halber nur durch Pfeile angedeutete Waschflüssigkeit 14 behandelt werden. Die Verbrennungsgase treten dann durch den ersten, oberen Übertrittskanal 17 in den nächsten Kanal 1, in dem sie nach unten geführt und dabei im Gleichstrom von der aus den Röhrden 2 austretenden Waschflüssigkeit gewaschen werden. Die Verbrennungsgase treten dann durch den nächsten unteren Übertrittskanal 17 in den dritten Kanal 1 ein, in dem sie wieder aufsteigen usw. Aus dem letzteren Kanal 1 treten die gewaschenen und gekühlten Verbrennungsgase durch den Austrittskanal 16 aus, in dem Vorzugsweise ein Sauggebläse eingesetzt ist, um eine ausreichende Zugwirkung durch die Einrichtung zu erzielen.

Bei Stillstand der Verbrennungsanlage ist auch die Umwälzpumpe 4 abgeschaltet, sodaß der höchste Füllstand (Flüssigkeitsspiegel 9) gegeben und das Zuführungsrohr 12 in die Flüssigkeit 14 eingetaucht ist. Wird dann die Anlage in Betrieb genommen, so werden die Umwälzpumpe 4 und das vorzugsweise vorgesehene Sauggebläse im Austrittskanal 16 eingeschaltet. Die Umwälzpumpe 4 füllt dabei den Speicherraum 11 unter Schließung des Rückschlagventiles 5, da die schwerkraftbedingte Durchtrittsmenge aller Röhrchen 2 pro Zeiteinheit kleiner als die Fördermenge der Umwälzpumpe ist. Hierdurch sinkt der Flüssigkeitsstand bis der Flüssigkeitsspiegel 8 erreicht und das Zuführungsrohr 12 und der Eintrittsstutzen 13 freigegeben sind. Mit Füllung des Speicherraumes 11 wird die Waschflüssigkeit 14 durch die Röhrchen 2 mit erhöhtem Druck beregnungsartig in die Kanäle 1 eingebracht und fließt in den Unterteil des Behälters 3 unter Waschung und Kühlung der Verbrennungsgase zurück. Die sich dabei erwärmende Waschflüssigkeit 14 kann zur Wärmerückgewinnung durch einen Wärmetauscher geführt werden, wobei der Kreislauf 6 nur schematisch angedeutet ist.

Wird die Verbrennungsanlage abgestellt und damit auch die Umwälzpumpe 4 und das Sauggebläse außer Funktion gesetzt, so fließt die im Speicherraum 11 enthaltene Waschflüssigkeit unter Öffnung des Rückschlagventiles 5 durch die Röhrchen in den Unterteil 22 des Behälters 3 zurück, wodurch der Flüssigkeitsstand wieder erhöht und das Zuführungsrohr 12 gesperrt wird. Dies unterbricht die Zugwirkung durch die erfindungsgemäße Einrichtung und hält die rasche Abkühlung der Verbrennungsanlage hintan.

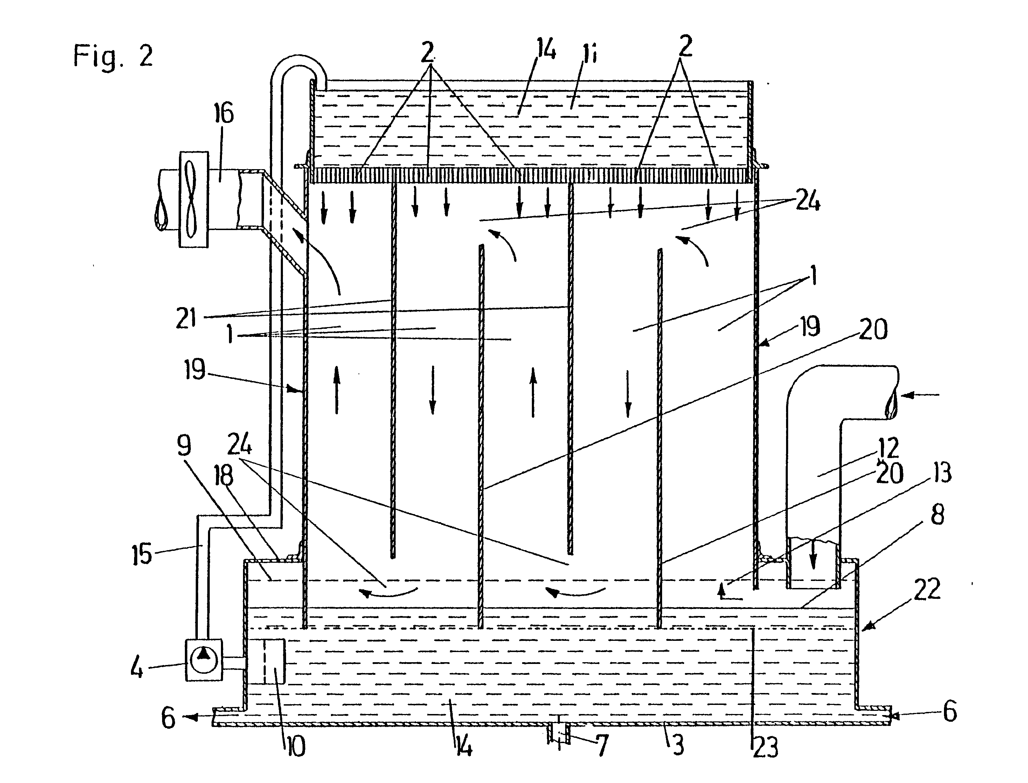

In Fig. 2 ist eine weitere Ausführung dargestellt, in der der Mittelteil 19 aus einem an der Ober- und Unterseite offenen Kasten besteht, der in eine Ausnehmung der Abdeckung 18 eingesetzt ist, und mittels seitlicher Auflagewinkel od. dgl. auf dem Unterteil 22 aufliegt. Die Kanäle im Mittelteil werden bei dieser Ausführung durch Trennwände 20, 21 gebildet, die wechselweise in der Höhe versetzt in den Mittelteil eingebaut sind. Dabei stehen die tiefer angeordneten Trennwände 20 jeweils so weit nach unten, daß sie auch bei niedrigstem Flüssigkeitsspiegel 8 in die Waschflüssigkeit 14 eintauchen, wobei ihre oberen Enden mit Abstand unterhalb der Röhrchen 2 verbleiben, wodurch je eine obere Übertrittsöffnung 24 zwischen den durch die Trennwand 20 begrenzten Kanälen 1 verbleibt.

Jede höher angeordnete Trennwand 21 gleicher Länge liegt hingegen mit ihrer Oberseite an Röhrchen 2 an, die in dieser Ausführung über den gesamten Boden des Speicherraumes 11 aneinandergereiht angeordnet sind, und endet mit Abstand zum niedrigsten Flüssigkeitsspiegel 8, gegebenenfalls wie dargestellt auch mit Abstand zum höchsten Flüssigkeitsspiegel 9, wodurch die unteren Übertrittsöffnungen 24 gebildet sind. Der Eintrittsteil 13 wird dabei durch den ersten vertikalen Kanal 1 direkt gebildet, da die diesem zugeordnete Außenwand des Mittelteiles 19 oberhalb des niedrigsten Flüssigkeitsspiegels 8 enden. Bei dieser Ausführung ist der Speicherraum 11 durch eine offene Wanne gebildet, sodaß sich ein Rückschlagventil in der Verbindungsleitung 15 erübrigt. Dabei ist die Durchttritsmenge durch die Röhrchen 2 anfangs kleiner und erreicht mit zunehmendem statischem Druck der Waschflüssigkeit 14 im Speicherraum die Fördermenge der Umwälzpumpe 4. Diese Ausführung ist besonders einfach im Aufbau, da im wesentlichen nur quaderförmige Teile übereinandergesetzt werden, die für die Wartung der Einrichtung ebenso einfach demontiert werden können. Die Röhrchen 2 können beispielsweise durch in eine Siebplatte eingesetzte Röhrchen, beispielsweise Hohlnieten, gebildet, bzw. auch durch Tiefziehen einer Materialbahn hergestellt werden.

Es ist weiters auch denkbar, den Behälter 3 und den Speicherraum 11 jeweils in mehrere Kammern mit eigener Verbindungsleitung und Umwälzpumpe zu unterteilen, sodaß die Verbrennungsgase nacheinander mit verschiedenen Waschflüssigkeiten behandelt werden, die jeweils zur Lösung verschiedener umweltschädlicher gasförmiger Bestandteile dienen.

Eine erfindungsgemäße Versuchseinrichtung war folgendermaßen aufgebaut: Als Verbrennungsanlage diente ein Küchenbeistellherd für feste Brennstoffe und diesem war eine erfindungsgemäße Einrichtung mit drei Kanälen 1 mit einer Länge von 1 500 mm nachgeschaltet, deren Röhrchen 20 mm Länge und 2 mm Durchmesser aufweisen. 40 l Wasser als Wasch- und Kühlflüssigkeit wurden umgewälzt. Im Küchenbeistellherd wurden 2 dm$^3$ kleingehacktes Fichtenholz in 20 Minuten verbrannt. Die mittlere Verbrennungsgasaustrittstemperatur aus dem Küchenbeistellherd betrug 400 °C, die Eintrittstemperatur am Eintrittsteil 13 360 °C. Die Austrittstemperatur am Austrittskanal 16 der Einrichtung betrug 35 °C.

Die umgewälzten 40 l Wasser wurden in dieser Zeit (20 Minuten) von 10 °C auf 38 °C erwärmt.

Als Vergleich wurden auf dem Küchenbeistellherd 5 l Wasser in einem Kochtopf gleichzeitig nur auf 32 °C erwärmt. Feste Anteile in den Verbrennungsgasen wurden restlos herausgewaschen und eine eindeutig saure Reaktion des Wassers war feststellbar.

### Patentansprüche

1. Einrichtung zur Behandlung von Verbrennungsgasen aus Verbrennungsanlagen, mit einem Behälter, mit einem Zuführungskanal für die Verbrennungsgase, mit einem Austrittskanal für die behandelten Verbrennungsgase, mit einer in zwei verschiedenen Füllhöhen vorgesehenen Waschflüssigkeit im Unterteil des Behälters, wobei bei größer Füllhöhe das Ende des Zuführungsrohres in die Waschflüssigkeit eingetaucht und bei niederster Füllhöhe mit Abstand zum Flüssigkeitsspiegel angeordnet ist, und mit nach unten gerichteten Flüssigkeitsaustrittsöffnungen im Oberteil des Behälters, sodaß austretende Waschflüssigkeit den Strömungsweg der Verbrennungsgase kreuzt, dadurch gekennzeichnet, daß im Mittelteil (19) des Behälters (3) zumindest ein vertikaler Kanal (1), vorzugsweise mehrere nebeneinander angeordnete und durch Übertrittsöffnungen (17, 24) verbundene Kanäle (1) vorgesehen sind, daß die Flüssigkeitsaustrittsöffnungen an einer Vielzahl von parallel nebeneinander angeordneten Röhrchen (2) vorgesehen sind, die den Kanalquerschnitt am oberen Ende vollständig ausfüllen, und die eine den natürlichen Regen simulierende Berieselung bewirken, daß oberhalb des Kanales (1) bzw. der Kanäle (1) ein Speicherraum (11) angeordnet ist, in den jeder Kanal (1) mündet und dessen Volumen zumindest dem Flüssigkeitsvolumen zwischen den beiden Füllhöhen im Unterteil (22) des Behälters (3) entspricht, und daß zwischen dem Unterteil (22) des Behälters (3) und dem Speicherraum (11) eine eine Umwälzpumpe (4) aufweisende Verbindungsleitung (15) vorgesehen ist, wobei deren Fördermenge pro Zeiteinheit zumindest so groß wie die Durchtrittsmenge aller Röhrchen (2) bei gefülltem Speicherraum (11) ist.

2. Einrichtung nach Anspruch 1, dadurch gekennzeichnet, daß der Mittelteil (19) des Behälters (3) als an der Ober- und Unterseite offener Kasten ausgebildet ist, der auf den Unterteil (22) aufgesetzt ist, wobei die Kanäle (1) durch in der Höhe alternierend versetzte Trennwände (20, 21) gebildet sind, von denen jede eine obere Übertrittsöffnung (24) freilassende Trennwand (20) im Unterteil (22) in die Waschflüssigkeit (14) auch bei niederster Füllhöhe eintaucht.

3. Einrichtung nach Anspruch 1, dadurch gekennzeichnet, daß der Mittelteil (19) des Behälters (3) aus mehreren einzelnen, die Kanäle (1) bildenden jeweils im Unterteil (22) auch bei niederster Füllhöhe in die Waschflüssigkeit (14) eintauchenden Rohren besteht, zwischen denen untere und obere Übertrittskanäle (17) vorgesehen sind, wobei die oberen Enden der Rohre in ein den Speicherraum (11) bildendes Querrohr eingesetzt sind, und in deren Eintrittstutzen die Röhrchen (2) eingesetzt sind.

4. Einrichtung nach Anspruch 2 oder 3, dadurch gekennzeichnet, daß der (oder der erste) Kanal (1) einen Eintrittsteil (13) für die Verbrennungsgase aufweist, dessen Ende in gleicher Höhe wie das Ende des Zuführrohres (12) und diesem benachbart ist.

5. Einrichtung nach einem der Ansprüche 1 bis 3, dadurch gekennzeichnet, daß das Verhältnis von Länge zu Durchmesser der Röhrchen (2) zwischen 5 : 1 und 10 : 1 ist.

### Claims

1. A device for treating combustion gases from combustion units, comprising a vessel, a supply duct for the combustion gases, an exhaust duct for the treated combustion gases, washing liquid provided at two different filling levels in the lower part of the vessel, with the end of the supply duct being dipped into the washing liquid if the liquid is at its maximum filling level and being spaced therefrom if the liquid is at its minimum filling level, and downwardly directed liquid discharge openings in the upper part of the vessel, so that exiting washing liquid crosses the flow path of the combustion gases, characterized in that in the middle part (19) of the vessel (3), at least one vertical duct (1), preferably a plurality of ducts (1) extending side by side and communicating with each other through flow passages (17, 24) are provided, that the liquid discharge openings are provided at a plurality of tubes (2) of parallel adjacent arrangement which completely fill the cross-sectional area of the ducts at the upper end and effect sprinkling simulating the natural rain, that above the duct (1) or ducts (1), a storage space (11) is provided into which each of the ducts (1) opens and which has a volume corresponding to at least the liquid volume between the two filling levels in the lower part (22) of the vessel (3), and that between the lower part (22) of the vessel (3) and the storage space (11), a connecting line (15) is provided including a circulating pump (4), with the delivery of the pump per unit time being at least equal to the total amount flowing through all the tubes (2), when the storage space (11) is filled.

2. A device according to claim 1, characterized in that the middle part (1) of the vessel (3) is designed as a box which is open at the top and bottom sides and mounted on the lower part (22), with the ducts (1) being formed by partition walls (20, 20) alternately offset in height, of which everyone leaving free an upper flow passage (24) dips into the washing liquid (14) in the lower part (22) even with the liquid at its minimum filling level.

3. A device according to claim 1, characterized in that the middle part (19) of the vessel (3) comprises a plurality of individual tubes which form the ducts (1) and are each dipped into the washing liquid (14) in the lower part (22), even with the liquid at its minimum filling level, and between which upper and lower flow passages (17) are provided, with the upper ends of the tubes being inserted into a transverse tube forming the storage space (11), and with the tubes (2) being inserted in the inlet connections of the tubes.

4. A device according to claim 2 or 3, characterized in that the (or the first) duct (1) comprises an entrance part (13) for the combustion gases, having its end at the level of the end of the supply tube (12) and being adjacent thereto.

5. A device according to one of claims 1 to 3, characterized in that the length-to-diameter ratio of the tubes (2) is between 5 : 1 and 10 : 1.

**Revendications**

1. Dispositif pour le traitement de gaz de combustion provenant d'installations de combustion, comprenant un réservoir, un canal d'amenée des gaz de combustion, un canal de sortie des gaz de combustion traités, un liquide de lavage prévu dans la partie inférieure du réservoir avec deux niveaux de remplissage différents, l'extrémité du tube d'amenée venant plonger dans le liquide de lavage au niveau de remplissage supérieur et, au niveau de remplissage inférieur, cette extrémité étant située à une certaine distance de la surface supérieure du liquide, ledit dispositif comprenant des orifices de sortie du liquide orientés vers le bas pratiqués dans la partie supérieure du réservoir de telle sorte que le liquide de lavage sortant croise le trajet du flux des gaz de combustion, caractérisé par le fait que dans la partie centrale (19) du réservoir (3) sont prévus au moins un canal vertical (1), de préférence plusieurs canaux (1) de préférence adjacents et reliés entre eux par des orifices de passage (17, 24) ; que les orifices de sortie du liquide sont prévus sur une pluralité de tubulures (2) mutuellement adjacentes et parallèles, lesquelles remplissent totalement la section du canal à son extrémité supérieure et qui provoquent un arrosage simulant une pluie naturelle ; qu'au-dessus du canal (1) ou des canaux (1) est prévue une chambre d'accumulation (11) dans laquelle débouche chaque canal (1) et dont le volume correspond au moins au volume du liquide entre les deux niveaux de remplissage dans la partie inférieure (22) du réservoir (3) ; et qu'entre la partie inférieure (22) du réservoir (3) et la chambre d'accumulation (11) est prévue une conduite de liaison (15) équipée d'une pompe de circulation (4), dont le débit de refoulement par unité de temps est au moins aussi élevé que le débit de passage à travers toutes les tubulures (2) lorsque la chambre (11) est pleine.

2. Dispositif selon la revendication 1, caractérisé par le fait que la partie centrale (19) du réservoir (3) est réalisée sous la forme d'un caisson ouvert sur le côté supérieur et sur le côté inférieur, ce caisson reposant sur la partie inférieure (22), les canaux (1) étant constitués par des parois de séparation (20, 21) décalées alternativement dans le sens de la hauteur, parmi lesquelles chacune des parois de séparation (20) qui dégagent un orifice de passage (24) supérieur plonge dans la partie inférieure (22) dans le liquide de lavage (14) même lorsque le niveau de remplissage est au plus bas.

3. Dispositif selon la revendication 1, caractérisé par le fait que la partie centrale (19) du réservoir (3) est constituée de plusieurs tubes formant les canaux (1) plongeant respectivement dans la partie inférieure (22) dans le liquide de lavage (14) même lorsque le niveau est au plus bas, tubes entre lesquels sont prévus les canaux de passage (17) inférieurs et supérieurs, les extrémités supérieures des tubes étant montées dans un tube transversal constituant la chambre d'accumulation (11) et les tubulures (2) étant montées dans les raccords d'admission de ces tubes.

4. Dispositif selon la revendication 2 ou 3, caractérisé par le fait que le (ou le premier) canal (1) présente une partie d'admission (13) pour les gaz de combustion, dont l'extrémité est à la même hauteur que l'extrémité du tube d'amenée (12) et située au voisinage de celui-ci.

5. Dispositif selon l'une des revendications 1 à 3, caractérisé par le fait que le rapport entre la longueur et le diamètre des tubulures (2) se situe entre 5 : 1 et 10 : 1.

Fig. 1

Fig. 2